# EUROPÄISCHE PATENTSCHRIFT

(11) **EP 3 803 289 B1**
(45) Veröffentlichungstag und Bekanntmachung des Hinweises auf die Patenterteilung: **06.07.2022**
(21) Anmeldenummer: 19726021.9
(22) Anmeldetag: 28.05.2019
(51) Int. Cl.: G01G 11/08, G01F 13/00, G01F 15/04

(54) **BEHÄLTER MIT VENTILKOPF ZUR PNEUMATISCHEN DOSIERUNG UND DOSIERANLAGE UMFASSEND EINEN SOLCHEN BEHÄLTER**
CONTAINER WITH VALVE HEAD FOR PNEUMATIC DOSING AND DOSING DEVICE COMPRISING SUCH A CONTAINER
RÉCIPIENT À TÊTE DE SOUPAPE DESTINÉ AU DOSAGE PNEUMATIQUE ET INSTALLATION DE DOSAGE COMPRENANT UN TEL RÉCIPIENT

(30) Priorität: 29.05.2018 EP 18174819
(43) Veröffentlichungstag der Anmeldung: 14.04.2021
(73) Patentinhaber: BASF Coatings GmbH, 48165 Münster (DE)
(72) Erfinder: BLASER, Alexander, 48165 Münster (DE)
(86) Internationale Anmeldenummer: PCT/EP2019/063798
(87) Internationale Veröffentlichungsnummer: WO 2019/229052

(56) Entgegenhaltungen:
- CN-U- 206 845 160

## Beschreibung

Die vorliegende Erfindung betrifft einen Behälter (1), der zum pneumatischen Dosieren einer darin befindlichen Komponente in einen weiteren von dem Behälter (1) verschiedenen Behälter geeignet ist, wobei der Behälter (1) einen Behälterkorpus (2), einen Behälterboden (2a) und einen zum Verschließen des Behälters (1) geeigneten abnehmbaren Deckel (3) umfasst, wobei der Behälter (1) wenigstens einen in den Behälterboden (2a) eingelassenen Ventilkopf (9) aufweist, an den ein von dem Behälter (1) verschiedener Behälter (10) anschließbar ist, in den eine pneumatische Dosierung einer in dem Behälter (1) befindlichen Komponente erfolgen kann, in den Deckel (3) des Behälters (1) wenigstens ein Druckluftanschluss (4) zum pneumatischen Antrieb des Ventilkopfes (9) und wenigstens ein weiterer Druckluftanschluss (5) integriert ist, und in den Deckel (3) ein Rührwerk (7) integriert sind, eine Verwendung des erfindungsgemäßen Behälters (1) zum vorgenannten Zweck, eine Dosieranlage (20) umfassend wenigstens einen erfindungsgemäßen Behälter (1), ein Verfahren zum pneumatischen Dosieren unter Verwendung des Behälters (1) sowie ein Verfahren zur Herstellung einer in der Automobilindustrie einsetzbaren Beschichtungsmittelzusammensetzung oder einer Vorstufe davon, welches Gebrauch vom Behälter (1) macht.

### Stand der Technik

In der Automobilindustrie einsetzbare Beschichtungsmittelzusammensetzungen werden heutzutage sowohl im (groß)industriellem Maßstab als auch zur Entwicklungszwecken im Labor üblicherweise unter Verwendung hierfür geeigneter Dosieranlagen hergestellt. Solchen in diesem Bereich eingesetzten Industrieanlagen liegt üblicherweise eine gravimetrische Arbeitsweise zugrunde, die Gebrauch von schwenkbaren und feststehenden Ventilen macht. Die Dosierventile solcher Anlagen sind über Rohrleitungen mit einem Lagersystem verbunden. Das Lagersystem umfasst Liefergebinde oder feste Tanks zur Materialversorgung der Dosieranlage und ist über festverankerte Rohrleitungssysteme mit der Dosieranlage verbunden. Durch die Nutzung fester Rohrleitungen in Kombination mit fest verankerten Dosierventilen innerhalb dieser herkömmlichen Dosieranlagen sind diese nicht flexibel und mobil nutz- bzw. einsetzbar.

Insbesondere im Fall von Dosieranlagen, die zur Herstellung von Beschichtungsmittelzusammensetzungen innerhalb von Laboren wie Forschungs- und Entwicklungslaboren eingesetzt werden, ist dies jedoch nachteilig, da sich in solchen Laboren entwickelte Zusammensetzungen wie Füller, Basislacke, Decklacke einschließlich Klarlacke sowie zur Herstellung dieser Lacke eingesetzte Vorstufen wie Pigmentpasten oder Halbfabrikate im Allgemeinen sich teilweise sehr stark hinsichtlich ihrer Zusammensetzung voneinander unterscheiden. So wird zur Herstellung solcher Zusammensetzungen beispielsweise eine Vielzahl unterschiedlichster Additive verwendet, die sowohl chemisch als auch hinsichtlich ihres Anwendungszwecks sehr stark verschieden voneinander sind. Eine Anbindung all dieser Additive an Dosierventile über feste Rohrleitungen und jeweils in einem zentralen Lager befindliche Vorratsgebinde oder Tanks ist nicht praktikabel, da die Variation und damit die Gesamtzahl an möglichen Additiven insgesamt viel zu hoch ist, und zudem die die Dosiermengen und die Dosierhäufigkeit der einzelnen Additive, bezogen auf die gesamte Anzahl an hergestellten Beschichtungsmittelzusammensetzungen viel zu gering ist. Um eine Anbindung aller potentiell einsetzbaren Additive an die Dosieranlage zu gewährleisten, müsste eine wirtschaftlich nicht mehr praktikable Anzahl an festen Rohrleitungen und Vorratstanks herfür zur Verfügung stehen. Zudem würde eine dauerhafte Bereitstellung einer solch hohen Anzahl an verschiedenen Additiven aufgrund deren vorgenannter vergleichsweise geringer Dosierhäufigkeit die Gefahr bergen, dass eine große Menge dieser Additive ungenutzt nach einer bestimmten Zeit entsorgt werden müsste, da zumindest einige der verwendeten Additive zumindest über einen langen Zeitraum nicht ausreichend (lager)stabil sind.

Entsprechende Nachteile gelten prinzipiell auch für die Bevorratung von Pigmentpasten in solchen Verbünden aus festen Rohrleitungen, Vorratstanks und Dosierventilen, da in der Praxis aus den im Zusammenhang mit den vorgenannten Additiven angeführten Gründen (insbesondere bezüglich ihrer Menge und der Dosierhäufigkeit) üblicherweise insgesamt eine nur sehr geringe Anzahl solcher Pasten deren Eintankung bzw. Bevorratung sinnvoll erscheinen lassen. Der Großteil an Pasten würde aufgrund ihrer insgesamt vergleichsweise geringen Dosierhäufigkeit somit lediglich die bestehenden Versorgungsleitungen blockieren. Bei ständig wechselnden Pastenzusammensetzungen (Pastenfarben) innerhalb der bestehenden Vorratstanks wäre auf der anderen Seite dagegen der Reinigungsaufwand der festen Verrohrungen aus wirtschaftlicher Sicht viel zu hoch, da natürlich bei Wechsel von einer Paste zu einer anderen innerhalb eines Tanks nicht nur der Tank selbst, sondern auch die festen Rohrleitungen einer Reinigung unterworfen werden müssten.

Zudem weisen insbesondere Effektpigmentpasten keine ausreichende Scherstabilität bei Einsatz in Verbünden aus festen Rohrleitungen, Vorratstanks und Dosierventilen auf, d.h. eine Versorgung aus Lagergebinden als Vorratsgebinde über feste Rohre zu den jeweiligen Ventilen der Dosieranlage ist für solchen Pasten schon aus diesen Gründen nicht möglich. Unabhängig davon tritt gerade bei Einsatz von Aluminiumpigmenten als Effektpigmenten zudem bei einem durchzuführenden Rohstoffwechsel das Problem auf, dass diese Pigmente auch bei intensiver Rohrleitungsreinigung nicht vollständig aus den Rohrleitungen beseitigt werden können. Als Folge dessen kann eine einmal entsprechend zu diesem Zweck eingesetzte Verrohrung nur noch exklusiv für den jeweiligen spezifischen Aluminiumpigment-Typ verwendet werden. Eine anderes Effektpigment oder ein anderer Rohstoff ließe sich - wenn überhaupt - nur noch mit extrem hohen (Reinigungs-)Aufwänden über diese feste Rohrzuleitung zum Ventil transportieren. In der Praxis müssen daher feste Rohrleitungen vielmehr meistens in solchen Fällen ausgebaut und erneuert werden, da auch trotz intensiver Reinigung die Aluminiumpigmente nicht mehr rückstandsfrei beseitigt werden können.

Im Stand der Technik sind zudem Dosieranlagen bekannt, die aus flexiblen Dosiereinheiten und Vorratsgebinden bestehen, beispielsweise solche der Firma Füll Systembau GmbH. Die Ventilsteuerung der Ventile dieser Dosiereinheiten erfolgt mittels mechanischen Antriebs. Solche mechanischen Antriebe sind jedoch oftmals sehr störanfällig und müssen daher vergleichsweise häufig gewartet werden. Zudem ist eine mechanische Ventilsteuerung vergleichsweise komplex, oftmals zu ungenau bei der Dosierung und erlaubt keine nur kurzen Ansteuerungszeiten, insbesondere keine Ansteuerungszeiten, die im Bereich von Millisekunden liegen. Ferner muss aufgrund der durch den Einsatz von mechanischen Antrieben vorgegebenen progressiven Steuerung der Dosierventile über den Grad der Ventilöffnung in Zusammenarbeit mit dem Waagesignal letzteres immer kontinuierlich vorliegen bzw. erfolgen, so dass dadurch keine diskontinuierliche Arbeitsweise möglich ist. Zudem muss bei diesen bekannten Dosieranlagen die jeweilige Dosiereinheit jeweils zu dem Gebinde befördert werden, in das die jeweils gewünschten Komponenten dosiert werden sollen und nicht umgekehrt, d.h. die Dosiereinheiten sind nicht an festen Punkt innerhalb der Dosierstrecke positioniert, sondern müssen bewegt werden. Der Nachteil an dieser Art von erforderlichen Schwenkventilen liegt jedoch darin, dass diese im Ring angeordnet sind, und die maximale Anzahl an Ventilen aufgrund dieser kreisförmigen Anordnung limitiert ist. Stand der Technik sind bei solchen schwenkbaren Dosierventilen Ringe mit maximal 80 verschiedenen Ventilen. Bei in Reihe schaltbaren Ventilen ist eine Limitierung im Hinblick auf ihre Anzahl durch die Maße des Gebäudes beschränkt, innerhalb dessen sie sich befinden.

Es besteht daher ein Bedarf an Dosieranlagen, die nicht nur für eine Vielzahl unterschiedlicher Lacksysteme genutzt werden können, sondern darüber hinaus so konstruiert sind, dass sie eine ausreichende Flexibilität und Mobilität sowie Genauigkeit bieten und die vorstehend genannten Nachteile, insbesondere diejenigen, die mit einem unerwünschten Reinigungsaufwand einzelner Bestandteile der Dosieranlage assoziiert sind, nicht aufweisen.

Das Dokument CN206845160U offenbart eine mobile Dosiereinrichtung mit einem pneumatischen Dosiertank und einer Transferpumpe.

### Aufgabe

Eine Aufgabe der vorliegenden Erfindung ist es daher, eine Dosierstation sowie eine Dosieranlage beinhaltend eine solche Dosierstation bereitzustellen, welche Vorteile gegenüber den aus dem Stand der Technik bekannten Dosierstationen und Dosieranlagen aufweisen. Insbesondere ist eine Aufgabe der vorliegenden Erfindung, eine Dosierstation sowie eine Dosieranlage beinhaltend eine solche Dosierstation bereitzustellen, die flexibel und mobil einsetzbar ist und einen wirtschaftlich vorteilhaften Betrieb von Dosieranlagen unter möglichst vollständiger oder zumindest erheblicher Minimierung von Reinigungsschritten ermöglicht, insbesondere wenn Effektpigmentpasten dosiert werden sollen.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Behälter (1), der zum pneumatischen Dosieren einer darin befindlichen Komponente in einen weiteren von dem Behälter (1) verschiedenen Behälter (10) geeignet ist, wobei der Behälter (1) einen Behälterkorpus (2), einen Behälterboden (2a) und einen zum Verschließen des Behälters (1) geeigneten abnehmbaren Deckel (3) umfasst, wobei
der Behälter (1) wenigstens einen in den Behälterboden (2a) eingelassenen Ventilkopf (9) aufweist, an den ein von dem Behälter (1) verschiedener Behälter (10) anschließbar ist, in den eine pneumatische Dosierung einer in dem Behälter (1) befindlichen Komponente erfolgen kann,
in den Deckel (3) des Behälters (1) wenigstens ein Druckluftanschluss (4) zum pneumatischen Antrieb des Ventilkopfes (9) und wenigstens ein weiterer Druckluftanschluss (5) integriert ist, wobei mittels an den Anschluss (5) angelegter Druckluft eine Förderung einer in dem Behälter (1) befindlichen Komponente zwecks Dosierung in den Behälter (10) erfolgen kann, und
in den Deckel (3) ein Rührwerk (7) integriert ist, welches auf der Außenseite (3a) des Deckels (3) einen Motor (8) zum Antrieb des Rührwerks (7) umfasst, und welches auf der Innenseite (3b) des Deckels (3) eine Rührwelle (7a) aufweist, die mittels des Motors (8) ansteuerbar ist, die ein oder mehrere an der Rührwelle (7a) angebrachte Rührorgane (7b) umfasst, wobei die Rührwelle (7a) so an der Innenseite (3b) des Deckels (3) angeordnet ist, dass sie bei mittels des Deckels (3) geschlossenem Zustand des Behälters (1) in den Behälterkorpus (2) hineinragt.

Ein weiterer Gegenstand der vorliegenden Erfindung ist eine Verwendung des erfindungsgemäßen Behälters (1) als vorzugsweise mobile Dosierstation zum pneumatischen Dosieren einer darin befindlichen Komponente in einen weiteren von dem Behälter (1) verschiedenen Behälter (10).

Ein weiterer Gegenstand der vorliegenden Erfindung ist eine Dosieranlage (20) umfassend wenigstens einen erfindungsgemäßen Behälter (1) als vorzugsweise mobile Dosierstation, wobei die erfindungsgemäße Dosieranlage (20) neben dem wenigstens einen als wenigstens eine vorzugsweise mobile Dosierstation eingesetzten Behälter (1) optional zudem wenigstens einen Vorratsbehälter (30) enthalten kann, der mittels wenigstens einer Rohrleitung (31) mit wenigstens einem Dosierventil (32) verbunden ist, welches permanenter Bestandteil der Dosieranlage (20) ist.

Ein weiterer Gegenstand der vorliegenden Erfindung ist ein Verfahren zum pneumatischen Dosieren unter Verwendung des erfindungsgemäßen Behälters (1), dadurch gekennzeichnet, dass das Verfahren wenigstens einen Schritt (i) umfasst, nämlich
(i) pneumatisches Dosieren einer in dem erfindungsgemäßen Behälter (1) befindlichen Komponente in einen weiteren von dem Behälter (1) verschiedenen Behälter.

Ein weiterer Gegenstand der vorliegenden Erfindung ist ein Verfahren zur Herstellung einer in der Automobilindustrie einsetzbaren Beschichtungsmittelzusammensetzung oder einer Vorstufe davon, dadurch gekennzeichnet, dass das Verfahren wenigstens einen Schritt (a) umfasst, nämlich
(a) pneumatisches Dosieren einer in dem erfindungsgemäßen Behälter (1) befindlichen Komponente in einen weiteren von dem Behälter (1) verschiedenen Behälter, wobei die Beschichtungsmittelzusammensetzung oder die Vorstufe davon nach ihrer Herstellung in diesem von dem Behälter (1) verschiedenen Behälter (10) vorliegt.

Es wurde überraschend gefunden, dass der als Dosierstation eingesetzte erfindungsgemäße Behälter (1), insbesondere als Teil der erfindungsgemäßen Dosieranlage (20), es ermöglicht, dass ein Rohstoffwechsel innerhalb von Vorratsbehältern und festen Rohrleitungen, der bei herkömmlichen Dosieranlagen bei der Herstellung unterschiedlichster Beschichtungsmittelzusammensetzungen notwendig ist, vollständig entfallen kann, da der Behälter (1) zu jeder Zeit auf einfache Art und Weise in die erfindungsgemäße Dosieranlage (20) integrierbar und wieder entfernbar ist. Fällt ein Rohstoffwechsel an, zum Beispiel von Komponente A zu Komponente B, kann so einfach der Behälter (1) enthaltend Komponente A aus der Dosieranlage (20) entfernt und ein Behälter (1) enthaltend Komponente B integriert werden. Ein Austausch innerhalb eines einzigen Vorratsbehälters ist somit nicht erforderlich. Da der erfindungsgemäße Behälter (1) selbst eine autarke Dosierstation darstellt und einen Dosierventilkopf (9) beinhaltet, entfällt zudem die ansonsten bei einem Rohstoffwechsel notwendige Reinigung sowohl der Vorratsbehälter als auch der Rohrleitungen als auch der Ventile. Dieser Vorteil ist insbesondere dann immanent, wenn ein Rohstoffwechsel vergleichsweise aufwendig ist, d.h. eine hohe Rüstzeitdauer und eine lange Dauer der erforderlichen Reinigung vorliegen, wie zum Beispiel im Fall von oftmals nicht pumpstabilen Effektpigmentpasten, von denen sonst oftmals Rückstände in den bestehenden Rohrleistungen und Ventilen verbleiben. Solche Effektpigmentpasten lassen sich jedoch ohne Probleme mittels des als Dosierstation eingesetzten erfindungsgemäßen Behälters (1), insbesondere als Teil der erfindungsgemäßen Dosieranlage (20), dosieren, da hier weder Pumpen noch Rohrleitungen zum Einsatz kommen. Der als Dosierstation eingesetzte erfindungsgemäße Behälter (1), insbesondere als Teil der erfindungsgemäßen Dosieranlage, ermöglicht somit überraschend eine sehr hohe Flexibilität bei der Herstellung von Beschichtungsmittelzusammensetzungen oder Vorstufen davon, insbesondere innerhalb von Laboren wie Forschungs- und Entwicklungslaboren, und zwar insbesondere bei Dosierung von Komponenten in zwar häufigen Einsatz, aber nur geringen Einsatzmengen wie Additiven oder bei Komponenten mit unzureichender Lagerstabilität und/oder Pumpstabilität wie Effektpigmentpasten.

Zudem können durch die pneumatische Dosierung Ansteuerungszeiten realisiert werden, die im Bereich von Millisekunden liegen. Damit kann die Dosiersteuerung der Dosierventile über den Parameter Öffnungsdauer der Ventile wesentlich genauere Dosierergebnisse auch in Kombination mit gleichzeitigem rühren realisieren als dies durch mechanisch angetriebene Dosierventile möglich ist. Ferner kann durch die pneumatische Dosierung auch diskontinuierlich gearbeitet werden d.h. eine Ansteuerung über die Dauer der Ventilöffnung und erst nach dieser Dosierung nachträglich Verwiegung und automatische Anpassung der Folgedosierung über die Dauer der Ventilöffnung

### Ausführliche Beschreibung

### Erfindungsgemäßer Behälter (1)

Der erfindungsgemäße Behälter (1) ist zum pneumatischen Dosieren einer darin befindlichen Komponente in einen weiteren von dem Behälter (1) verschiedenen Behälter (10) geeignet. Der erfindungsgemäße Behälter (1) wird daher als Dosierstation eingesetzt und stellt eine solche dar, insbesondere als Teile einer Dosieranlage. Vorzugsweise stellt der erfindungsgemäße Behälter (1) eine mobile Dosierstation dar und kann daher auch als Ventilwechselbehälter bezeichnet werden.

Vorzugsweise enthält der Behälterkorpus (2) des erfindungsgemäßen Behälters (1) wenigstens eine Komponente, die zur Herstellung einer in der Automobilindustrie einsetzbaren Beschichtungsmittelzusammensetzung oder einer Vorstufe davon einsetzbar ist, und die einer pneumatischen Dosierung mittels des erfindungsgemäßen Behälters (1) unterworfen werden soll. Als entsprechende Komponente werden vorzugsweise Lösungen oder Dispersionen eingesetzt.

Vorzugsweise enthält der erfindungsgemäße Behälter (1) keine Pumpe, insbesondere keine Pumpe, die zur Förderung irgendwelcher in den Behälter (1) einzuspeisender oder aus diesem heraus zu transportierenden Komponenten eingesetzt wird. Vorzugsweise enthält der erfindungsgemäße Behälter (1) keine Rohrleitung(en), insbesondere keine, die zum Transport von darin befindlichen Komponenten oder zum Einfüllen von Komponenten in den Behälter (1) nutzbar sind.

Grundsätzlich ist jede Art von Material zur Herstellung des Behälters (1), insbesondere des Behälterkorpus (2) geeignet. Vorzugsweise ist der Behälter (1), insbesondere der Behälterkorpus (2), jedoch aus wenigstens einem Metall oder wenigstens einer Legierung gefertigt. Vorzugsweise ist wird zur Herstellung des Behälters (1) und insbesondere des Behälterkorpus (2) Stahl, besonders bevorzugt Edelstahl, eingesetzt.

Das Volumen des Behälterkorpus (2) liegt vorzugsweise in einem Bereich von 1 bis 20 I, besonders bevorzugt in einem Bereich von 1,5 bis 10 I, ganz besonders bevorzugt in einem Bereich von 2 bis 8 I, insbesondere in einem Bereich von 2,5 bis 6 I.

Vorzugsweise ist der Behälterkorpus (2) des erfindungsgemäßen Behälters (1) im Wesentlichen rund. In diesem Fall ist das Totvolumen innerhalb des Behälterkorpus (2) nur sehr gering bzw. gar nicht vorhanden, so dass die Durchmischung mittels des Rührwerks (7) innerhalb des Behälterkorpus optimal verlaufen kann.

In den Deckel (3) des erfindungsgemäßen Behälters (1) ist wenigstens ein Druckluftanschluss (4) zum pneumatischen Antrieb des Ventilkopfes (9) integriert. An den Druckluftanschluss (4) kann eine Druckluftleitung angeschlossen werden. Der Druckluftanschluss (4) dient zum pneumatischen Antrieb und zur Steuerung des Ventilkopfes (9). Vorzugsweise ist der Druckluftanschluss (4) Teil einer Ventilantriebseinheit (4a), die sich auf der Außenseite des Deckels (3a) befindet und mittels der die pneumatische Dosierung ermöglicht wird. Teil dieser Ventilantriebseinheit (4a) ist vorzugsweise zudem eine Ventilantriebstange (6), mittels der der Ventilkopf (9) mit dem Druckluftanschluss (4) verbunden ist.

In den Deckel (3) des erfindungsgemäßen Behälters (1) ist wenigstens ein weiterer Druckluftanschluss (5) integriert. An den Druckluftanschluss (5) kann eine Druckluftleitung angeschlossen werden. Der Druckluftanschluss (5) dient zur Förderung einer in dem Behälter (1) befindlichen Komponente zwecks Dosierung in den Behälter (10). Über diesen Anschluss (5) wird vorzugsweise mittels Druckluft ein Überdruck angelegt, vorzugsweise von bis zu 0,5 bar, besonders bevorzugt in einem Bereich von 0,05 bis 0,4 bar, insbesondere von 0,1 bis 0,4 bar, um eine kontinuierliche Förderung der in dem Behälter (1) befindlichen und zu dosierenden wenigstens einen Komponente in den Behälter (10) zu gewährleisten. Durch Anlegen von Druckluft an den Anschluss (5) kann also ein Überdruck innerhalb des Behälters (1) erzeugt werden, wenn dieser mittels des Deckels (3) verschlossen ist. Dadurch wird ein kontinuierlicher Volumenstrom der in dem Behälter (1) enthaltenen Komponente erzeugt, der eine Dosierung mittels des Dosierventilkopfes (9) ermöglicht.

Der erfindungsgemäße Behälter (1) weist wenigstens einen in den Behälterboden (2a) eingelassenen Ventilkopf (9) auf, an den ein von dem Behälter (1) verschiedener Behälter (10) anschließbar ist, in den eine pneumatische Dosierung einer in dem Behälter (1) befindlichen Komponente erfolgen kann. Der Dosierventilkopf (9) ist vorzugsweise sowohl zur Dosierung von Feinströmen als auch von Grobströmen befähigt. Vorzugsweise weist der Ventilkopf (9) deshalb wenigstens zwei unterschiedliche Ventilöffnungen auf. Dies wird vorzugsweise dadurch realisiert, dass der Ventilkopf (9) einen Ring (9a) aus Teflon zur Dosierung von Grobströmen und zudem einen in der Mitte dieses Rings aus Teflon befindlichen Stift (9b) aus Metall zur Dosierung von Feinströmen aufweist. Sowohl Ring (9a) als auch Stift (9b) sind vorzugsweise federschließend vorgespannt und werden pneumatisch mittels Druckluft über den Druckluftanschluss (4) betrieben bzw. gesteuert. Beispielsweise werden so bei einem vergleichsweise hohen angelegten Überdruck von zum Beispiel 5 bar beide Ventilöffnungen, also Ring (9a) und Stift (9b), geöffnet (Grobstrom). Dagegen wird bei einem vergleichsweise geringen angelegten Überdruck von zum Beispiel nur 2 bar nur der Stift (9b) geöffnet, d.h. es erfolgt dann nur eine Feindosierung. Der Ring (9a) bleibt in diesem Fall geschlossen, da der angelegte Überdruck von 2 bar nicht ausreicht, die Federkraft des Rings (9a) auszugleichen bzw. zu überwinden.

Der Dosierventilkopf (9) ist vorzugsweise mittels einer Ventilantriebstange (6) mit dem Druckluftanschluss (4) verbunden, insbesondere als Teil der Ventilantriebseinheit (4a), die sich auf der Außenseite des Deckels (3a) befindet und mittels der die pneumatische Dosierung ermöglicht wird. Insbesondere ist der Dosierventilkopf (9) mittels einer Ventilantriebstange (6) mit der Ventilantriebseinheit (4a) verbunden.

Die Ventilantriebseinheit (4a) umfasst vorzugsweise zudem eine Einstellschraube (4b), mittels der der Dosierventilkopf (9) geöffnet bzw. geschlossen werden kann bzw. mittels der die Ventilöffnung(en) wie der Ring (9a) und/oder der Stift (9b) eingestellt werden kann/können. Die Einstellschraube (4b) drückt dabei vorzugsweise gegen den federgespannten Ventilkopf (9) bzw. gegen den federgespannten Ring (9a) und den federgespannten Stift (9b).

An den Ventilkopf (9) des erfindungsgemäßen Behälters (1) ist ein von dem Behälter (1) verschiedener Behälter (10) anschließbar, in den die pneumatische Dosierung einer in dem Behälter (1) befindlichen Komponente erfolgen soll. Zum Anschluss eignen sich zu diesem Zweck beispielsweise Schnellverschlüsse und/oder Klammern, die vorzugsweise schraubbar sind. Besonders bevorzugt wird ein Tri-clamp-Verschluss eingesetzt.

Vorzugsweise befindet sich der Ventilkopf (9) am Behälterboden (2a) in einer Position, oberhalb derer die Rührwelle (7a) in den Korpus (2) hineinragt.

Vorzugsweise ist der erfindungsgemäße Behälter (1) bei mittels des Deckels (3) geschlossenem Zustand des Behälters (1) bei einem Überdruck von bis zu 0,5 bar, besonders bevorzugt von bis zu 0,4 bar, insbesondere von bis zu 0,3 bar einsetzbar, der mittels des Druckluftanschlusses (5) erzeugt werden kann.

An den Druckluftanschluss (4), der zum pneumatischen Antrieb des Dosierventilkopfes eingesetzt werden kann, kann vorzugsweise ein Überdruck von bis zu 8 bar angelegt werden. Vorzugsweise kann hier ein Überdruck von 0,5 bis 6 bar erzeugt werden, wobei höhere Werte wie beispielsweise von 3,5 bis 6 oder bis 5 bar zur Grobdosierung verwendet werden und niedrigere Werte wie zum Beispiel von 0,5 oder 1 bar bis 1,5 oder 2 bar zur Feindosierung eingesetzt werden.

In den Deckel (3) des Behälters (1) ist ein Rührwerk (7) integriert , welches auf der Außenseite (3a) des Deckels (3) einen Motor (8) zum Antrieb des Rührwerks (7) umfasst, und welches auf der Innenseite (3b) des Deckels (3) eine Rührwelle (7a) aufweist, die mittels des Motors (8) ansteuerbar ist, die ein oder mehrere an der Rührwelle (7a) angebrachte Rührorgane (7b) umfasst, wobei die Rührwelle (7a) so an der Innenseite (3b) des Deckels (3) angeordnet ist, dass sie bei mittels des Deckels (3) geschlossenem Zustand des Behälters (1) vorzugsweise zentral in den Behälterkorpus (2) hineinragt. Dabei wird jedoch der Behälterboden (2a) weder von der Rührwelle (7a) noch von dem wenigstens einen Rührkörper (7b) berührt.

Der Deckel (3) ist vom erfindungsgemäßen Behälter (1) abnehmbar und dient dem Verschluss des Behälters (1). Der Behälter (1) ist vorzugsweise mittels des Deckels (3) zu jeder Zeit wiederverschließbar. Zum Verschließen sind beispielsweise Schnellverschlüsse und/oder Klammern geeignet, die vorzugsweise schraubbar sind. Besonders bevorzugt wird ein Tri-clamp-Verschluss eingesetzt.

Vorzugsweise umfasst das Rührwerk (7) des Behälters (1) eine Rührwelle (7a), die zu einer Höchstdrehzahl im Bereich von 100 bis 500 min⁻¹, besonders bevorzugt von 200 bis 400 min⁻¹ befähigt ist. Vorzugsweise ist die Rührwelle (7a) höhenverstellbar. Dies ermöglicht eine optimale Durchmischung des Inhalts des Behälters (1) bei jeder Füllmenge.

Jede Art von Rührorganen (7b) können eingesetzt werden. Vorzugsweise sind die Rührorgane (7b) ausgewählt aus der Gruppe bestehend aus Propellern, Schrägblättern, Scheiben, Taumelscheiben, Hollowblades, Impellern, Kreuzbalken, Ankern, Blättern, Gittern du Zahnscheiben. Besonders bevorzugt sind Propeller.

Vorzugsweise ragt die Ventilantriebstange (6) des erfindungsgemäßen Behälters (1) bei mittels des Deckels (3) geschlossenem Zustand des Behälters (1) weiter in den Behälterkorpus (2) hinein als die Rührwelle (7a).

Vorzugsweise ist der Motor (8) auf die Außenseite (3a) des Deckels (3) des Behälters (1) geflanscht. Vorzugsweise wird ein elektrisch betriebener Motor (8) eingesetzt. Besonders bevorzugt wird als Motor (8) ein Radialkolbenmotor oder ein Lamellenmotor eingesetzt. Ganz besonders bevorzugt ist ein Radialkolbenmotor.

### Erfindungsgemäße Verwendung

Ein weiterer Gegenstand der vorliegenden Erfindung ist eine Verwendung des erfindungsgemäßen Behälters (1) als vorzugsweise mobile Dosierstation zum pneumatischen Dosieren einer darin befindlichen Komponente in einen weiteren von dem Behälter (1) verschiedenen Behälter (10).

Alle im Zusammenhang mit dem erfindungsgemäßen Behälter (1) hierin zuvor beschriebenen bevorzugten Ausführungsformen sind auch bevorzugte Ausführungsformen hinsichtlich der erfindungsgemäßen Verwendung des erfindungsgemäßen Behälters (1).

Vorzugsweise wird der erfindungsgemäße Behälter (1) dabei als mobile Dosierstation eingesetzt.

Vorzugsweise dient die erfindungsgemäße Verwendung zur Herstellung von Effektpigmentpasten.

### Erfindungsgemäße Dosieranlage

Vorzugsweise kann der erfindungsgemäße Behälter (1) als Teile einer Dosieranlage fungieren. Ein weiterer Gegenstand der vorliegenden Erfindung ist daher eine Dosieranlage (20) umfassend wenigstens einen erfindungsgemäßen Behälter (1) als vorzugsweise mobile Dosierstation.

Alle im Zusammenhang mit dem erfindungsgemäßen Behälter (1) und der erfindungsgemäßen Verwendung hierin zuvor beschriebenen bevorzugten Ausführungsformen sind auch bevorzugte Ausführungsformen hinsichtlich des Einsatzes des erfindungsgemäßen Behälters (1) als Teil der erfindungsgemäßen Dosieranlage (20).

Der erfindungsgemäße Behälter (1) kann somit in eine Dosieranlage (20) integriert werden, vorzugsweise mittels Einhängen in eine hierfür vorgesehene Position innerhalb der Dosieranlage (20). Vorzugsweise umfasst die erfindungsgemäße Dosieranlage (20) bis zu 50 verfügbare Dosierplätze, an denen jeweils ein erfindungsgemäßer Behälter (1) als Dosierstation positioniert werden kann.

Vorzugsweise umfasst die erfindungsgemäße Dosieranlage (20) bis zu 50 der erfindungsgemäßen Behälter (1) und damit bis zu 50 Dosierstationen. Zusätzlich kann die erfindungsgemäße Dosieranlage (20) eine Vorratsstation (24) umfassen, in die bei Bedarf weitere erfindungsgemäße Behälter (1) integriert werden können. Diese weiteren erfindungsgemäßen Behälter (1) stellen dann einen Vorrat an solchen Behältern (1) innerhalb der Dosieranlage dar und ermöglichen eine noch breitere Variation an Behältern (1).

Der wenigstens eine in die erfindungsgemäße Dosieranlage (20) integrierte erfindungsgemäße Behälter (1) sind somit vorzugsweise Teil der Dosierstrecke, die durch das Design der Dosieranlage (20) vorgegeben ist. Ein (leerer) Behälter, der ein von dem erfindungsgemäßen Behälter (1) verschiedener Behälter ist, in den die pneumatische Dosierung einer in dem Behälter (1) befindlichen Komponente erfolgen soll und der mittels des Auslasses (9) an die erfindungsgemäße Dosiereinheit anschließbar ist, wird somit zwecks seiner Befüllung mittels Dosierung zur erfindungsgemäßen Dosieranlage (20) transportiert, um dort befüllt zu werden.

Vorzugsweise ist die erfindungsgemäße Dosieranlage (20) eine volumetrische oder gravimetrische Dosieranlage, besonders bevorzugt eine gravimetrische Dosieranlage.

Vorzugsweise umfasst die erfindungsgemäße Dosieranlage (20) wenigstens einen Höhenadapter (25), mittels dem der erfindungsgemäße Behälter (1) in jeder gewünschten Höhe innerhalb der Dosieranlage (20) positioniert werden kann.

Vorzugsweise enthält die erfindungsgemäße Dosieranlage (20) neben dem wenigstens einen als wenigstens eine vorzugsweise mobile Dosierstation eingesetzten Behälter (1) zudem wenigstens einen Vorratsbehälter (21), der mittels wenigstens einer Rohrleitung (22) mit wenigstens einem Dosierventil (23) verbunden ist, welches permanenter Bestandteil der Dosieranlage ist. Vorzugsweise ist auch die wenigstens eine Rohrleitung (22) permanenter Bestandteil der Dosieranlage. Eine solche erfindungsgemäße Dosieranlage (20) stellt eine Kombination einer herkömmlichen Dosieranlage, die vorzugsweise wenigstens schwenkbare und feststehende Dosierventile und mit diesen verbundene Rohrleitungen, die wiederum mit Vorratsbehältern verbunden sind, welche die zu dosierenden Komponenten enthalten, mit wenigstens einem als Dosierstation eingesetzten erfindungsgemäßen Behälter (1) dar.

### Erfindungsgemäße Verfahren

Ein weiterer Gegenstand der vorliegenden Erfindung ist ein Verfahren zum pneumatischen Dosieren unter Verwendung des erfindungsgemäßen Behälters (1), dadurch gekennzeichnet, dass das Verfahren wenigstens einen Schritt (i) umfasst, nämlich
(i) pneumatisches Dosieren einer in dem erfindungsgemäßen Behälter (1) befindlichen Komponente in einen weiteren von dem Behälter (1) verschiedenen Behälter (10).

Ein weiterer Gegenstand der vorliegenden Erfindung ist Verfahren zur Herstellung einer in der Automobilindustrie einsetzbaren Beschichtungsmittelzusammensetzung oder einer Vorstufe davon, dadurch gekennzeichnet, dass das Verfahren wenigstens einen Schritt (a) umfasst, nämlich
(a) pneumatisches Dosieren einer in dem erfindungsgemäßen Behälter (1) befindlichen Komponente in einen weiteren von dem Behälter (1) verschiedenen Behälter, wobei die Beschichtungsmittelzusammensetzung oder die Vorstufe davon nach ihrer Herstellung in diesem von dem Behälter (1) verschiedenen Behälter (10) vorliegt.

Alle im Zusammenhang mit dem erfindungsgemäßen Behälter (1) und der erfindungsgemäßen Verwendung sowie der erfindungsgemäßen Dosieranlage hierin zuvor beschriebenen bevorzugten Ausführungsformen sind auch bevorzugte Ausführungsformen hinsichtlich der erfindungsgemäßen Verfahren.

Vorzugsweise werden die erfindungsgemäßen Verfahren innerhalb und mittels der erfindungsgemäßen Dosieranlage (20) durchgeführt.

Das erfindungsgemäße Verfahren ist ein Verfahren zur Herstellung einer in der Automobilindustrie einsetzbaren Beschichtungsmittelzusammensetzung oder einer Vorstufe davon. Dabei sind sowohl Beschichtungsmittelzusammensetzungen herstellbar, die im Rahmen einer OEM-Serienlackierung als auch im Rahmen einer Reparaturlackierung eingesetzt werden können. Gleiches gilt für entsprechende Vorstufen. Vorzugsweise wird das erfindungsgemäße Verfahren bei der Entwicklung von in der Automobilindustrie einsetzbaren Beschichtungsmittelzusammensetzungen oder Vorstufen davon eingesetzt, vorzugsweise innerhalb von Laboren wie Forschungs- und Entwicklungslaboren.

In der Automobilindustrie einsetzbare Beschichtungsmittelzusammensetzungen sind beispielsweise Elektrotauchlacke, Primer, Füller, Basislacke, insbesondere Wasserbasislacke, Decklacke einschließlich von Klarlacken, insbesondere lösemittelbasierten Klarlacken. Eine Vorstufe einer in der Automobilindustrie einsetzbaren Beschichtungsmittelzusammensetzung ist vorzugsweise eine Pigment- und/oder Füllstoffpaste. Der Begriff der Pigmentpaste beinhaltet dabei Farbpigmentpasten und Effektpigmentpasten. Vorstufen umfassen zudem (temporäre) Halbfabrikate, die zur Herstellung solcher Beschichtungsmittelzusammensetzungen eingesetzt werden können.

### Beispiele

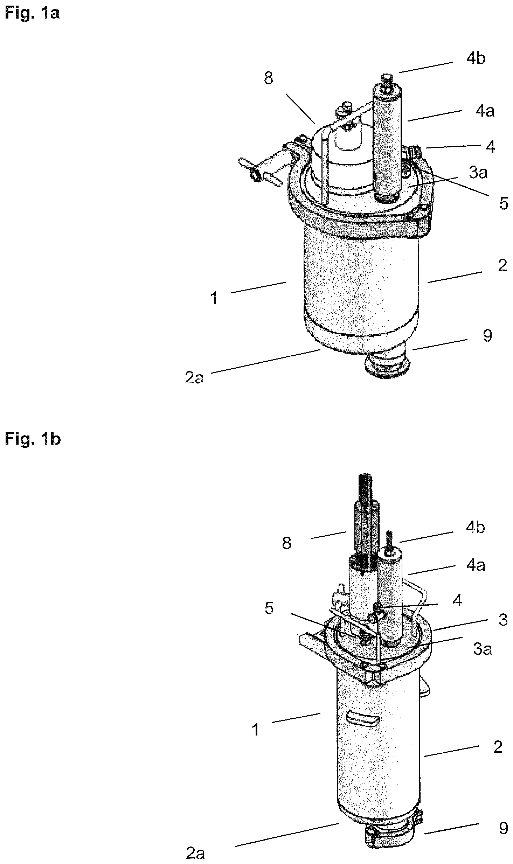

Die nachfolgenden Beispiele dienen der Erläuterung der Erfindung, sind jedoch nicht einschränkend auszulegen. Die Beispiele werden anhand der **Figuren 1a, 1b** und **2** bis **4** beschrieben, die exemplarische erfindungsgemäße Ausführungsformen beschreiben.
**Fig. 1a** und **Fig. 1b** stellen schematische Darstellungen eines erfindungsgemäßen Behälters (1) dar, die sich im Wesentlichen nur in der Form und damit einhergehend in dem Volumen des Behälterkorpus (2) und damit des Behälters (1) unterscheiden sowie in der Art des eingesetzten Motors (8). Der Behälter (1) befindet sich jeweils im geschlossenen Zustand, so dass alle an der Innenseite (3b) des Deckels (3) befindlichen Elemente nicht sichtbar sind.

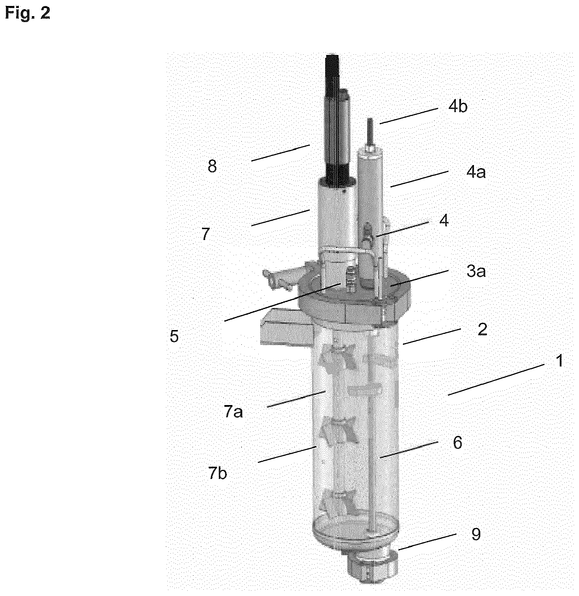

**Fig. 2** stellt eine schematische Darstellung des geschlossenen erfindungsgemäßen Behälters (1) gemäß **Fig. 1b** dar, wobei jedoch die innerhalb des Behälters (1) befindlichen Elemente sichtbar gemacht worden sind.

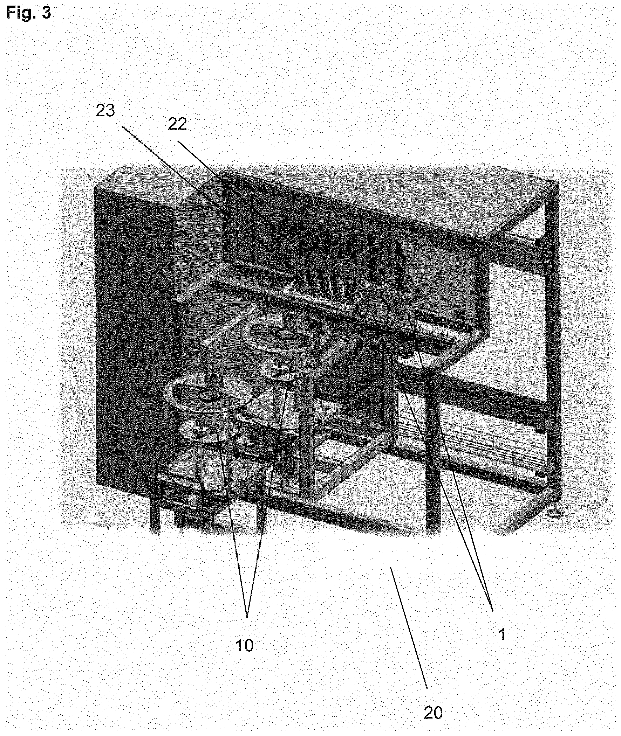

**Fig. 3** stellt eine schematische Darstellung einer erfindungsgemäßen Dosieranlage (20) dar, die eine Kombination aus zwei geschlossenen erfindungsgemäßen Behältern (1) sowie insgesamt fünf festen Rohrleitungen (22) beinhaltet, wobei jede dieser festen Rohrleitungen (22) mit jeweils einem Dosierventil (23) verbunden ist, welches permanenter Bestandteil der Dosieranlage ist. Zudem sind in **Fig. 3** zwei zu befüllende Behälter (10) abgebildet, in die dosiert werden soll.

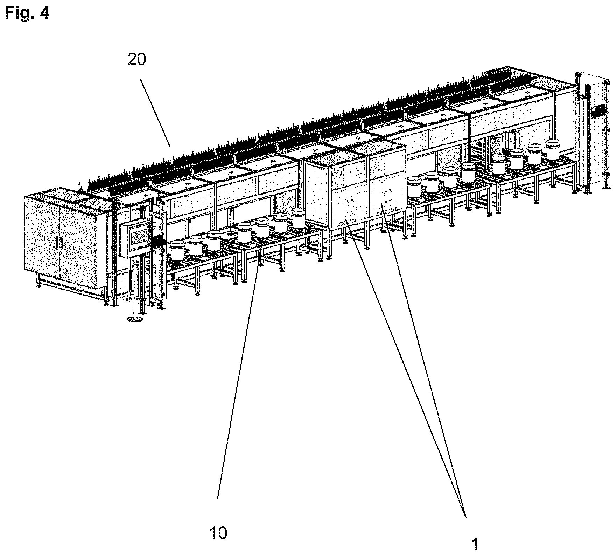

**Fig. 4** stellt ebenfalls eine schematische Darstellung einer erfindungsgemäßen Dosieranlage dar, die zwei geschlossene erfindungsgemäße Behältern (1) beinhaltet. Zudem sind in **Fig. 4** eine Reihe von befüllenden Behältern (10) abgebildet, in die dosiert werden soll.

## Patentansprüche

1. Ein Behälter (1), der zum pneumatischen Dosieren einer darin befindlichen Komponente in einen weiteren von dem Behälter (1) verschiedenen Behälter (10) geeignet ist, wobei der Behälter (1) einen Behälterkorpus (2), einen Behälterboden (2a) und einen zum Verschließen des Behälters (1) geeigneten abnehmbaren Deckel (3) umfasst, wobei
der Behälter (1) wenigstens einen in den Behälterboden (2a) eingelassenen Ventilkopf (9) aufweist, an den ein von dem Behälter (1) verschiedener Behälter (10) anschließbar ist, in den eine pneumatische Dosierung einer in dem Behälter (1) befindlichen Komponente erfolgen kann,
in den Deckel (3) des Behälters (1) wenigstens ein Druckluftanschluss (4) zum pneumatischen Antrieb des Ventilkopfes (9) und wenigstens ein weiterer Druckluftanschluss (5) integriert ist, wobei mittels an den Anschluss (5) angelegter Druckluft eine Förderung einer in dem Behälter (1) befindlichen Komponente zwecks Dosierung in den Behälter (10) erfolgen kann, und
in den Deckel (3) ein Rührwerk (7) integriert ist, welches auf der Außenseite (3a) des Deckels (3) einen Motor (8) zum Antrieb des Rührwerks (7) umfasst, und welches auf der Innenseite (3b) des Deckels (3) eine Rührwelle (7a) aufweist, die mittels des Motors (8) ansteuerbar ist, die ein oder mehrere an der Rührwelle (7a) angebrachte Rührorgane (7b) umfasst, wobei die Rührwelle (7a) so an der Innenseite (3b) des Deckels (3) angeordnet ist, dass sie bei mittels des Deckels (3) geschlossenem Zustand des Behälters (1) in den Behälterkorpus (2) hineinragt.

2. Der Behälter (1) gemäß Anspruch 1, **dadurch gekennzeichnet, dass** der Druckluftanschluss (4) Teil einer Ventilantriebseinheit (4a) ist, die sich auf der Außenseite des Deckels (3a) befindet.

3. Der Behälter (1) gemäß Anspruch 1 oder 2, **dadurch gekennzeichnet, dass** der Behälterkorpus (2) im Wesentlichen rund ist.

4. Der Behälter (1) gemäß einem der vorstehenden Ansprüche, **dadurch gekennzeichnet, dass** der Behälterkorpus (2) wenigstens eine Komponente enthält, die zur Herstellung einer in der Automobilindustrie einsetzbaren Beschichtungsmittelzusammensetzung oder einer Vorstufe davon einsetzbar ist, und die einer pneumatischen Dosierung unterworfen werden soll.

5. Der Behälter (1) gemäß einem der vorstehenden Ansprüche, **dadurch gekennzeichnet, dass** der Ventilkopf (9) mittels einer Ventilantriebstange (6) mit einer den Druckluftanschluss (4) umfassenden Ventilantriebseinheit (4a) verbunden ist, die sich auf der Außenseite des Deckels (3a) befindet.

6. Der Behälter (1) gemäß einem der vorstehenden Ansprüche, **dadurch gekennzeichnet, dass** der Ventilkopf (9) wenigstens zwei unterschiedliche Ventilöffnungen beinhaltet und dadurch sowohl zur Dosierung von Feinströmen als auch von Grobströmen befähigt ist.

7. Eine Verwendung des Behälters (1) gemäß einem der vorstehenden Ansprüche als Dosierstation zum pneumatischen Dosieren einer darin befindlichen Komponente in einen weiteren von dem Behälter (1) verschiedenen Behälter (10).

8. Die Verwendung gemäß Anspruch 7, **dadurch gekennzeichnet, dass** der Behälter (1) als mobile Dosierstation eingesetzt wird.

9. Die Verwendung gemäß Anspruch 7 oder 8 zur Herstellung von Effektpigmentpasten.

10. Eine Dosieranlage (20) umfassend wenigstens einen Behälter (1) gemäß einem der Ansprüche 1 bis 6 als Dosierstation.

11. Die Dosieranlage (20) gemäß Anspruch 10, **dadurch gekennzeichnet, dass** sie eine gravimetrische Dosieranlage ist.

12. Die Dosieranlage (20) gemäß Anspruch 10 oder 11, **dadurch gekennzeichnet, dass** sie bis zu 50 der Behälter (1) und damit bis zu 50 Dosierstationen umfasst.

13. Die Dosieranlage (20) gemäß einem der Ansprüche 10 bis 12, **dadurch gekennzeichnet, dass** sie neben dem wenigstens einen als wenigstens eine vorzugsweise mobile Dosierstation eingesetzten Behälter (1) zudem wenigstens einen Vorratsbehälter (21) enthält, der mittels wenigstens einer Rohrleitung (22) mit wenigstens einem Dosierventil (23) verbunden ist, welches permanenter Bestandteil der Dosieranlage ist.

14. Ein Verfahren zum pneumatischen Dosieren unter Verwendung des Behälters (1) gemäß einem der Ansprüche 1 bis 6, **dadurch gekennzeichnet, dass** das Verfahren wenigstens einen Schritt (i) umfasst, nämlich
(i) pneumatisches Dosieren einer in dem Behälter (1) gemäß einem der Ansprüche 1 bis 6 befindlichen Komponente in einen weiteren von dem Behälter (1) verschiedenen Behälter (10).

15. Ein Verfahren zur Herstellung einer in der Automobilindustrie einsetzbaren Beschichtungsmittelzusammensetzung oder einer Vorstufe davon, **dadurch gekennzeichnet, dass** das Verfahren wenigstens einen Schritt (a) umfasst, nämlich
(a) pneumatisches Dosieren einer in dem Behälter (1) gemäß einem der Ansprüche 1 bis 6 befindlichen Komponente in einen weiteren von dem Behälter (1) verschiedenen Behälter, wobei die Beschichtungsmittelzusammensetzung oder die Vorstufe davon nach ihrer Herstellung in diesem von dem Behälter (1) verschiedenen Behälter (10) vorliegt.

## Claims

1. A container (1) which is suitable for the pneumatic metering of a component situated therein into another container (10) different from the container (1), wherein the container (1) comprises a container body (2), a container base (2a) and a removable cover (3) suitable for closing the container (1), wherein
the container (1) has at least one valve head (9), which is recessed into the container base (2a) and to which it is possible to connect a container (10) which is different from the container (1) and into which pneumatic metering of a component situated in the container (1) can be performed,
at least one compressed air connection (4) for the pneumatic driving of the valve head (9) and at least one further compressed air connection (5) are integrated into the cover (3) of the container (1), wherein delivery of a component situated in the container (1) for the purpose of metering into the container (10) can be performed by means of compressed air applied to the connection (5), and
a stirrer (7), which comprises a motor (8) for driving the stirrer (7) on the outside (3a) of the cover (3) and which, on the inside (3b) of the cover (3), has a stirrer shaft (7a), which can be driven by means of the motor (8) and which comprises one or more stirring members (7b) mounted on the stirrer shaft (7a), is integrated into the cover (3), wherein the stirrer shaft (7a) is arranged in such a way on the inside (3b) of the cover (3) that it projects into the container body (2) in the state of the container (1) in which said container is closed by means of the cover (3).

2. The container (1) according to Claim 1, **characterized in that** the compressed air connection (4) is part of a valve drive unit (4a), which is situated on the outside of the cover (3a).

3. The container (1) according to Claim 1 or 2, **characterized in that** the container body (2) is substantially round.

4. The container (1) according to one of the preceding claims, **characterized in that** the container body (2) contains at least one component which can be used to produce a coating composition or a precursor thereof that can be used in the automotive industry and which is to be subjected to pneumatic metering.

5. The container (1) according to one of the preceding claims, **characterized in that** the valve head (9) is connected by means of a valve drive rod (6) to a valve drive unit (4a), which comprises the compressed air connection (4) and is situated on the outside of the cover (3a).

6. The container (1) according to one of the preceding claims, **characterized in that** the valve head (9) contains at least two different valve openings and, as a result, is capable of metering both fine flows and coarse flows.

7. A use of the container (1) according to one of the preceding claims as a metering station for the pneumatic metering of a component situated therein into another container (10) different from the container (1).

8. The use according to Claim 7, **characterized in that** the container (1) is used as a mobile metering station.

9. The use according to Claim 7 or 8 for the production of special-effect pigment pastes.

10. A metering system (20) comprising at least one container (1) according to one of Claims 1 to 6 as a metering station.

11. The metering system (20) according to Claim 10, **characterized in that** it is a gravimetric metering system.

12. The metering system (20) according to Claim 10 or 11, **characterized in that** it comprises up to 50 of the containers (1) and hence up to 50 metering stations.

13. The metering system (20) according to one of Claims 10 to 12, **characterized in that**, in addition to the at least one container (1) used as at least one, preferably mobile, metering station, said system furthermore contains at least one supply container (21), which is connected by means of at least one pipe (22) to at least one metering valve (23), which is a permanent component part of the metering system.

14. A method for pneumatic metering using the container (1) according to one of Claims 1 to 6, **characterized in that** the method comprises at least one step (i), namely
(i) pneumatic metering of a component situated in the container (1) according to one of Claims 1 to 6 into another container (10) different from the container (1).

15. A method for producing a coating composition or a precursor thereof that can be used in the automotive industry, **characterized in that** the method comprises at least one step (a), namely
(a) pneumatic metering of a component situated in the container (1) according to one of Claims 1 to 6 into another container different from the container (1), wherein, after being produced, the coating composition or the precursor thereof is present in this container (10) different from the container (1).

## Revendications

1. Récipient (1), qui est approprié au dosage pneumatique d'un composant se trouvant dans celui-ci dans un autre récipient (10) différent du récipient (1), le récipient (1) comportant un corps de récipient (2), un fond de récipient (2a) et un couvercle amovible (3) approprié à la fermeture du récipient (1),
le récipient (1) comprenant au moins une tête de soupape (9) intégrée dans le fond de récipient (2a), à laquelle peut être raccordé un récipient (10), différent du récipient (1), dans lequel un dosage pneumatique d'un composant se trouvant dans le récipient (1) peut s'effectuer,
au moins un raccord d'air comprimé (4) servant à l'entraînement pneumatique de la tête de soupape (9) et au moins un autre raccord d'air comprimé (5) étant intégrés dans le couvercle (3) du récipient (1), une alimentation en un composant se trouvant dans le récipient (1) pouvant être effectuée grâce à de l'air comprimé appliqué au raccord (5) à des fins de dosage dans le récipient (10), et
un agitateur (7) étant intégré dans le couvercle (3), lequel agitateur comporte un moteur (8) servant à l'entraînement de l'agitateur (7) sur le côté extérieur (3a) du couvercle (3), et lequel agitateur comprend, sur le côté intérieur (3b) du couvercle (3), un arbre d'agitation (7a) qui peut être commandé au moyen du moteur (8), qui comporte un ou plusieurs organes d'agitation (7b) montés sur l'arbre d'agitation (7a), l'arbre d'agitation (7a) étant disposé sur le côté intérieur (3b) du couvercle (3) de telle sorte qu'il pénètre dans le corps de récipient (2) dans l'état, fermé au moyen du couvercle (3), du récipient (1).

2. Récipient (1) selon la revendication 1, **caractérisé en ce que** le raccord d'air comprimé (4) fait partie d'une unité d'entraînement de soupape (4a) qui se trouve sur le côté extérieur du couvercle (3a).

3. Récipient (1) selon la revendication 1 ou 2, **caractérisé en ce que** le corps de récipient (2) est sensiblement rond.

4. Récipient (1) selon l'une des revendications précédentes, **caractérisé en ce que** le corps de récipient (2) contient au moins un composant, qui est utilisable pour la production d'une composition d'agent de revêtement ou d'un précurseur de celle-ci, utilisable dans l'industrie automobile, et qui doit être soumis à un dosage pneumatique.

5. Récipient (1) selon l'une des revendications précédentes, **caractérisé en ce que** la tête de soupape (9) est reliée à une unité d'entraînement de soupape (4a) comportant le raccord d'air comprimé (4) au moyen d'une tige d'entraînement de soupape (6), laquelle unité se trouve sur le côté extérieur du couvercle (3a).

6. Récipient (1) selon l'une des revendications précédentes, **caractérisé en ce que** la tête de soupape (9) possède au moins deux ouvertures de soupape différentes et est par conséquent apte au dosage à la fois de flux fins et de flux grossiers.

7. Utilisation du récipient (1) selon l'une des revendications précédentes comme station de dosage servant au dosage pneumatique d'un composant se trouvant dans celui-ci dans un autre récipient (10) différent du récipient (1).

8. Utilisation selon la revendication 7, **caractérisée en ce que** le récipient (1) est utilisé comme station de dosage mobile.

9. Utilisation selon la revendication 7 ou 8 pour la production de pâtes de pigment à effet.

10. Installation de dosage (20) comportant au moins un récipient (1) selon l'une des revendications 1 à 6 comme station de dosage.

11. Installation de dosage (20) selon la revendication 10, **caractérisée en ce qu'**elle est une installation de dosage gravimétrique.

12. Installation de dosage (20) selon la revendication 10 ou 11, **caractérisée en ce qu'**elle comporte jusqu'à 50 des récipients (1) et par conséquent jusqu'à 50 stations de dosage.

13. Installation de dosage (20) selon l'une des revendications 10 à 12, **caractérisée en ce qu'**elle contient, en plus de l'au moins un récipient (1) utilisé comme au moins une station de dosage de préférence mobile, en outre au moins un récipient de stockage (21) qui, au moyen d'au moins une conduite tubulaire (22), est relié à au moins une soupape de dosage (23), laquelle est une partie constitutive permanente de l'installation de dosage.

14. Procédé de dosage pneumatique à l'aide du récipient (1) selon l'une des revendications 1 à 6, **caractérisé en ce que** le procédé comporte au moins une étape (i), à savoir
(i) le dosage pneumatique d'un composant se trouvant dans le récipient (1) selon l'une des revendications 1 à 6 dans un autre récipient (10) différent du récipient (1).

15. Procédé de production d'une composition d'agent de revêtement ou d'un précurseur de celle-ci, utilisable dans l'industrie automobile, **caractérisé en ce que** le procédé comporte au moins une étape (a), à savoir
(a) le dosage pneumatique d'un composant se trouvant dans le récipient (1) selon l'une des revendications 1 à 6 dans un autre récipient différent du récipient (1), la composition d'agent de revêtement ou le précurseur de celle-ci étant, après sa production, présent(e) dans ce récipient (10) différent du récipient (1).
